## Europäisches Patentamt
## European Patent Office
## Office européen des brevets

(11) Veröffentlichungsnummer: **0 139 034**
**B1**

(12) # EUROPÄISCHE PATENTSCHRIFT

(45) Veröffentlichungstag der Patentschrift:
13.01.88

(51) Int. Cl.⁴: **H 04 B 7/185**

(21) Anmeldenummer: **83110528.3**

(22) Anmeldetag: **21.10.83**

---

(54) Verfahren zum Übertragen von Nachrichtendiensten über Satelliten.

---

(43) Veröffentlichungstag der Anmeldung:
**02.05.85 Patentblatt 85/18**

(45) Bekanntmachung des Hinweises auf die Patenterteilung:
**13.01.88 Patentblatt 88/2**

(84) Benannte Vertragsstaaten:
**DE FR GB IT SE**

(56) Entgegenhaltungen:
**EP-A-0 033 149**
**US-A-4 145 573**

**INTELSAT/IEE INTERNATIONAL CONFERENCE ON DIGITAL SATELLITE COMMUNICATION, 25.-27. November 1969, Seiten 387-398, London, GB S. NISHIDA et al.: "An adaptive multiple access satellite communication system at millimeter wavelengths"**
**TELECOMMUNICATIONS AND RADIO ENGINEERING, Teil 2 RADIO ENGINEERING, Band 33, Nr. 4, April 1978, Seiten 44-54, Scripta Publishing Co., Washington, USA I.M. AINBINDER et al.: "The future of satellite communications systems development"**

(73) Patentinhaber: **ANT Nachrichtentechnik GmbH, Gerberstrasse 33, D-7150 Backnang (DE)**

(72) Erfinder: **Sperlich, Josef, Dipl.- Ing., Kelterweg 52, D-7150 Backnang (DE)**

---

LIBER, STOCKHOLM 1988

## Beschreibung

Die vorliegende Erfindung betrifft ein Verfahren zum Übertragen von Nachrichtendiensten im Zeitmultiplexbetrieb mit Mehrfachzugriff (TDMA), über einen Satelliten mit mehreren Empfangs- und Sendeeinheiten, zwischen denen über eine Schaltmatrix beliebige Zuordnungen hergestellt werden können, wobei mehrere empfangene Nachrichtendienste auf mindestens eine Sendeeinheit durchgeschaltet werden.

Ein derartiges Verfahren, durch das es z. B. möglich ist, einen von einer Bodenstation ausgehenden Nachrichtendienst auf mehrere verschiedene Verkehrsgebiete oder auch die Nachrichtendienste von mehreren Bodenstationen auf ein einziges gemeinsames Verkehrsgebiet auszustrahlen, ist aus der EP-A-0 033 149 bekannt.

Der Erfindung liegt nun die Aufgabe zugrunde, ein Verfahren der eingangs genannten Art anzugeben, nach dem vom Satelliten die Nachrichtendienste mit mmöglichst geringer Sendeleistung und in einer für die Demodulation der erdseitigen Empfänger günstigen Form ausgestrahlt werden können.

Diese Aufgabe wird erfindungsgemäß dadurch gelöst, daß die Nachrichtendienste in der (den) Sendeeinheit(en) zunächst demoduliert, dann impulsbündelweise abgespeichert und anschließend kontinuierlich mit niedrigerer Bitrate als die Impuisbündel zuvor aufwiesen aus dem Speicher ausgelesen werden, um schließlich die Nachrichten in Form eines kontinuierlichen Bitstromes auszusenden.

Zweckmäßige Ausführungen der Erfindung gehen aus den Unteransprüchen hervor.

Dadurch, daß die Nachrichtendienste vom Satelliten in einem kontinuierlichen Bitstrom ausgesendet werden, ist eine einfache Demodulation dieser Nachrichtendienste auf der Empfangsseite möglich. Außerdem brauchen die Empfänger nur schmalbandig ausgelegt zu sein, da der vom Satelliten ausgesendete Bitstrom eine Bandbreitenverminderung erfahren hat.

Anhand von in der Zeichnung dargestellten. Ausführungsbeispielen wird nun die Erfindung näher erläutert. Es zeigen:

Fig. 1 das Blockschaltbild eines SS-TDMA (Satellite Switched-TDMA) Systems,

Fig. 2 Impulsrahmen der Eingangs- und Ausgangssignale dieses Systems,

Fig. 3 das Blockschaltbild eines erweiterten SS-TDMA Systems,

Fig. 4 Impulsrahmen der Eingangs- und Ausgangssignale dieses erweiterten Systems,

Fig. 5 die schematische Darstellung eines erdseitigen Netzes zum Übertragen dreier schmalbandiger Nachrichtendienste und

Fig. 6 die Struktur der Impulsrahmen dieser Nachrichtendienste.

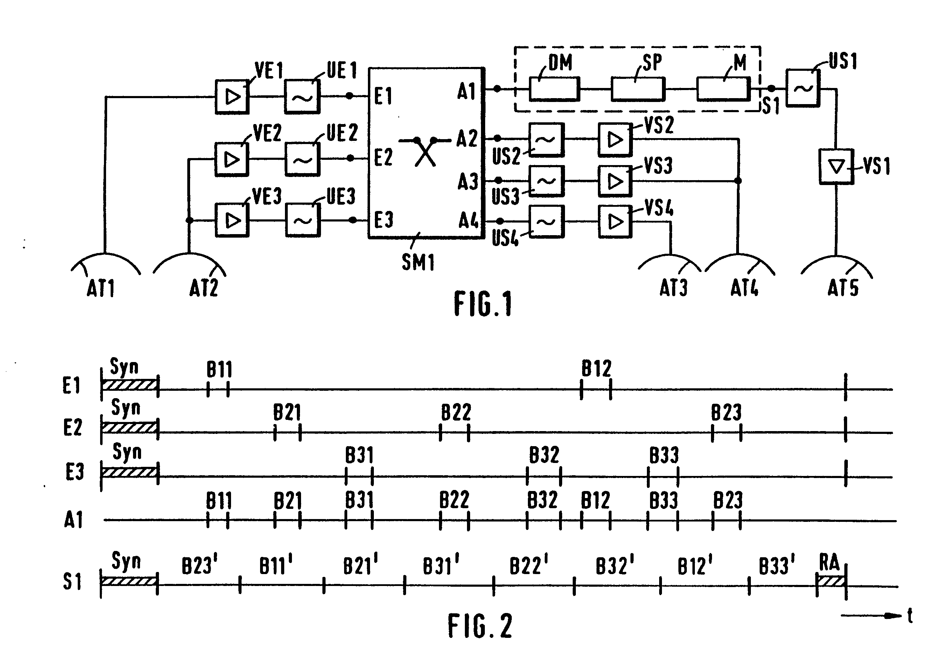

Bei dem in der Fig. 1 dargestellten Satelliten geschalteten Zeitmultiplexsystem mit Vielfachzugriff SS-TDMA (Satellite Switched-Time Division Multiple Access) sind an den Eingängen E1, E2, E3 einer Schaltmatrix SM1 Empfangseinheiten, bestehend aus den Antennen AT1, AT2, den Verstärkern VE1, VE2, VE3 und den Umsetzern UE1, UE2, UE3, angeschlossen. Die Ausgänge A2, A3, A4 der Schaltmatrix SM1 sind mit Sendeeinheiten, bestehend aus den Umsetzern US2, US3, US4, den Verstärkern VS2, VS3, VS4 und den Antennen AT3, AT4 beschaltet. Mit Hilfe der Schaltmatrix SM1 kann jede Empfangseinheit auf jede der vorhandenen Sendeeinheiten durchgeschaltet werden, um z. B. einen von einer Bodenstation aus zu einer Empfangseinheit des Satelliten übertragenen Nachrichtendienst von einer Sendeeinheit, welche einem bestimmten Ausleuchtgebiet auf der Erde zugeordnet ist, auszusenden.

Nun ist es aber auch möglich, die von sämtlichen Empfangseinheiten empfangenen Nachrichtendienste über eine einzige Sendeeinheit im Zeitmultiplexbetrieb mit Mehrfachzugriff (TDMA) abzustrahlen. Eine solche Sendeeinheit ist an den Ausgang A1 der Schaltmatrix SM1 angeschlossen und besteht aus einem Demodulator DM, einem Speicher SP, einem Modulator M, einem Umsetzer US1, einem Verstärker VS1 und einer Antenne AT5. Der Demodulator DM wandelt zunächst die von den Eingängen E1 ... E3 auf den Ausgang A1 der Schaltmatrix SM1 durchgeschalteten Impulsbündel (Bursts) der Nachrichtendienste in Binärsignale um. Dann werden die Binärsignale impulsbündelweise in dem Speicher SP abgelegt. Anschließend werden die Impulsbündel kontinuierlich aneinandergereiht aus dem Speicher herausgelesen und zwar mit niedrigerer Bitrate als sie vorher in den Speicher eingelesen worden sind. Wegen der niedrigen Bitrate ist auch nur ein schmales Übertragungs frequenzband auf der Abwärtsstrecke vom Satelliten zum Boden erforderlich. Dadurch verringert sich vorteilhafterweise die Sendeleistung dieses Verstärkers VS1 des Satelliten. Der den Speicher verlassende, kontinuierliche Bitstrom wird in dem Modulator M phasenmoduliert und vor dem Ausstrahlen über die Antenne AT5 mit einem HF-Träger in die gewünschte Übertragungsfrequenzlage umgesetzt.

Die erdseitigen Empfänger brauchen wegen der oben geschilderten Maßnahmen nur schmalbandig ausgelegt zu sein und kontinuierliche Bitströme zu verarbeiten, weswegen relativ unkomplizierte Demodulatoren verwendet werden können.

In der Fig. 2 sind die Impulsrahmen des SS-TDMA-Systems gemäß Fig. 1 dargestellt. Am Eingang E1 der Schaltmatrix SM1 liegt der Impulsrahmen mit den bestimmten Nachrichtendiensten zugeordneten Impulsbündeln B11 und B12, am Eingang E2 der Impulsrahmen mit den Impulsbündeln B21, B22 und B23 und am Eingang E3 der Impulsrahmen mit den Impulsbündeln B31, B32 und B33, wobei jeder Impulsrahmen mit einem Synchronisierwort Syn beginnt und alle Impulsbündel entsprechend dem TDMA-Verfahren zeitlich ineinander verschachtelt sind. Am Ausgang A1 der Schaltmatrix sind die Impulsbündel der betrachteten Nachrichtendienste der drei vorher genannten Impulsrahmen zeitlich hintereinandergereiht. Nach dem Demodulator DM, dem Speicher SP und dem Modulator M am Punkt S1 findet man dann einen Impulsrahmen vor, in dem die Impulsbündel mit einer verringerten Bitrate kontinuierlich, ohne zeitlichen Abstand zusammengefaßt sind. Sollten die Impulsbündel den Impulsrahmen nicht ganz belegen, so wird der verbleibende Platz mit statistischer Information RA ausgefüllt. Jedes von der Erde zum Satelliten übertragene Impulsbündel besitzt einige der eigentlichen Information vorangestellte Bits, die der Synchronisation des Demodulators DM dienen. Diese Bits brauchen nicht mit in den Speicher SP eingelesen zu werden. Die Impulsbündel des abzustrahlenden Impulsrahmens am Punkt S1 enthalten daher diese Synchronisationsbits nicht mehr, weshalb die Impulsbündel mit einem Apostroph gekennzeichnet sind.

Die Flexibilität des beschriebenen Systems läßt sich noch dadurch erhöhen, daß man einen Demodulator DM einsetzt, der auf verschiedene Bitraten einstellbar ist. Insbesondere bei phasenmodulierten Signalen sind Umschaltungen von z. B. mit 16 Phasen modulierten Signalen auf solche mit 8, 4 oder 2 Phasen möglich, was bei gleicher Baudrate jeweils einer Halbierung der übertragenen binären Bitrate entspricht. Die Umschaltung kann z. B. über ein Telemetrie- und Telecontrol-System des Satelliten erfolgen, über das in der Regel auch die Durchschaltzeitpunktverteilung für die Schaltmatrix SM1 vorgenommen wird. Aber auch von einer Referenz-Erdefunkstelle aus kann die Umschaltung veranlaßt werden.

Die für die Schaltmatrix sowieso vorhandene Steuerung, könnte auch herangezogen werden, um den Demodulator auf die gewollten Bitraten umzuschalten, wobei innerhalb eines Impulsrahmens eine Umschaltung der Bitrate von einem Impulsbündel zum nächsten erfolgen kann.

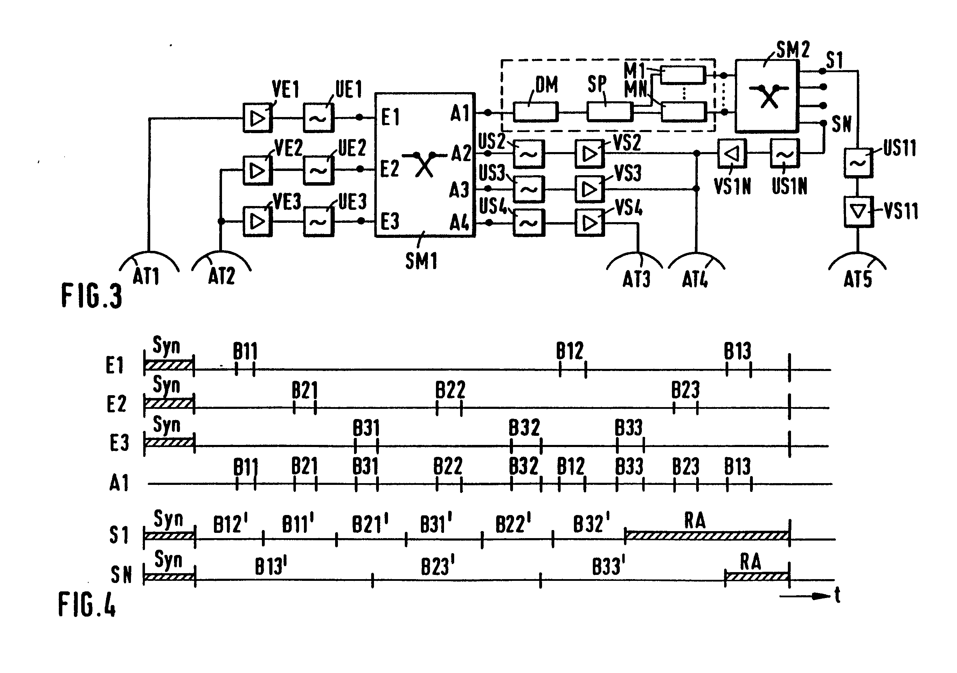

Die Fig 3 zeigt ein SS-TDMA System das gegenüber dem in der Fig 1 dargestellten erweitert ist. Mit diesem System ist es möglich, einzelne schmalbandige Nachrichtendienste oder Dienstegruppen unterschiedlicher Modulationen und/oder Abstrahlrichtungen zuzuordnen. Dazu kann der Speicher, gesteuert durch das oben erwähnte Telemetrie- und Telecontrol-System, beim Auslesen der Bitströme eine Aufteilung der Nachrichtendienste auf mehrere Ausgänge vollziehen. Jeder Ausgang ist mit einem eigenen Modulator M1 ... MN beschaltet, wobei sich die Modulatoren in der Modulationsart und u.U. in der Bitrate der abzustrahlenden Bitströme voneinander unterscheiden.

Die Ausgänge des Speichers SP bzw. die der Modulation M1 ... MN sind mit den Eingängen einer Schaltmatrix SM2 verbunden. An den Ausgängen S1 ... SN der Schaltmatrix SM2 sind Umsetzer US11 ... US1N mit nachfolgenden Verstärkern VS11 ... VS1N angeschlossen, welche zu Antennen AT4, AT5 mit unterschiedlichen Abstrahlrichtungen führen. Diese Anordnung ermöglicht eine flexible Zuordnung der Nachrichtendienste zu verschiedenen Ausleuchtzonen, wobei zwischen den Nachrichtendiensten auch noch eine Unterscheidung bezüglich der Modulationsart und/oder Bitrate getroffen werden kann. Die Schaltmatrix SM2 kann mit der gleichen Steuerung, z. B. Telemetrie- und Telecontrol-System, wie die vorher erwähnte Schaltmatrix SM1 bedient werden.

Der Fig. 4 sind an den Punkten E1, E2, E3, A1, S1 und SN der in Fig. 3 gezeigten Anordnung, erscheinende Impulsrahmen zu entnehmen. Gemäß diesem Ausführungsbeispiel ist im Speicher SP eine solche Aufteilung der Nachrichtendienste erfolgt, daß der Impulsrahmen am Ausgang S1 der Schaltmatrix SM2 die Impulsbündel B12', B11', B21', B31', B22' und der Impulsrahmen am Ausgang SN die restlichen der vom Satelliten empfangenen Impulsbündel B13', B23', B33' enthält.

Im folgenden soll nun als ein Anwendungsbeispiel für das obige SS-TDMA-System die Verkehrsabwicklung von drei schmalbandigen Nachrichtendiensten - z. B. die Übertragung von Suchmeldungen für Teilnehmer eines Selektivruf-Netzes, die Übertragung von Nachrichten für Teilnehmer eines öffentlich beweglichen Landfunknetzes und die Übertragung von Verkehrswarndurchsagen - erläutert werden.

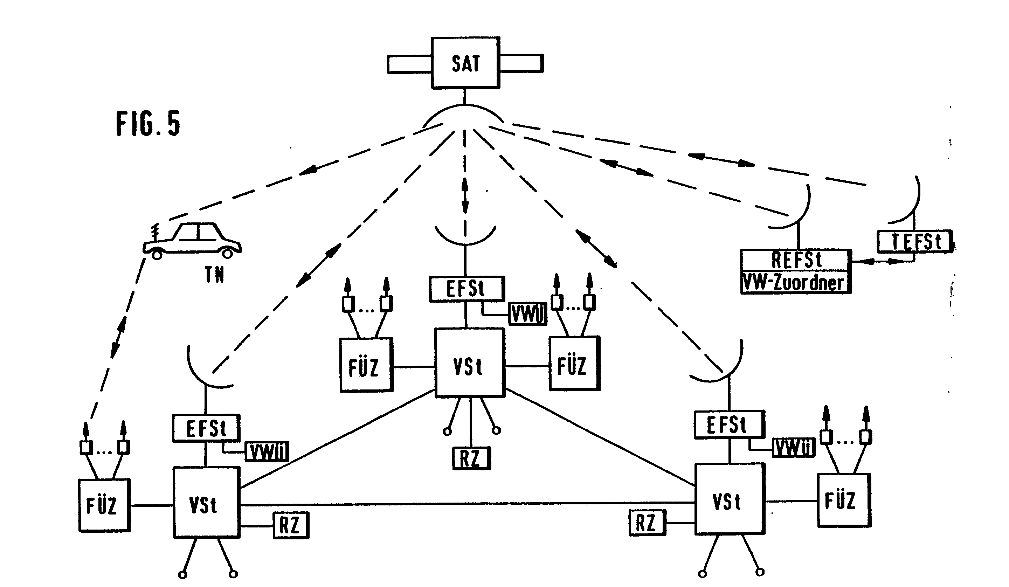

Die Fig. 5 zeigt schematisch den Aufbau des bodenseitigen Verkehrsnetzes für die Ausstrahlung und den Empfang der genannten drei Nachrichtendienste unter Einbeziehung eines Satelliten, der gemäß der vorangegangenen Beschreibung nach dem SS-TDMA Verfahren betrieben wird.

Für die Übertragung der Nachrichtendienste zwischen dem Satelliten SAT und Teilnehmern auf der Erde stehen Erdefunkstellen EFSt bereit, welche direkt oder über Vermittlungsstellen VSt von z. B. Fernsprechnetzen mit Rufzentralen RZ, Funküberleitzentralen FÜZ und Verkehrswarnübertragungseinrichtungen VWÜ verbunden sind. Die Rufzentralen RZ sind für die Zusammenstellung von Suchmeldungen an Teilnehmer TN eines Selektivruf-Netzes, die Funküberleitzentrale FÜZ für die Zusammenstellung von Suchmeldungen und Nachrichten an Teilnehmer TN eines öffentlich beweglichen Landfunknetzes und die Verkehrswarnübertragungseinrichtungen VWÜ für die Aufbereitung und Übertragung von Verkehrswarndurchsagen zuständig.

Die Zuteilung von Übertragungskapazität an die Erdefunkstellen EFSt wird von einer Referenz-Erdefunkstelle REFSt, die aus Sicherheitsgründen in der Regel gedoppelt ist, vorgenommen. Die Referenz-Erdfunkstelle REFSt sorgt auch dafür, daß sich die Impulsbündel für die Nachrichtendienste nicht überlappen, wenn der Verkehr über mehrere Empfangs- und Sendeeinheiten des Satelliten SAT abgewickelt wird.

Die Telemetrie- und Telecontrol-Information wird von einer eigenen Erdfunkstelle TEFSt übertragen. Sie ist u.a. für die Lageregelung und die Betriebsüberwachung des Satelliten zuständig und kann auch den Informationstransfer für die Schaltmatrixsteuerungen übernehmen. Sämtliche vorhandene Schaltmatrizen können von einer einzigen Steuerung aus bedient werden.

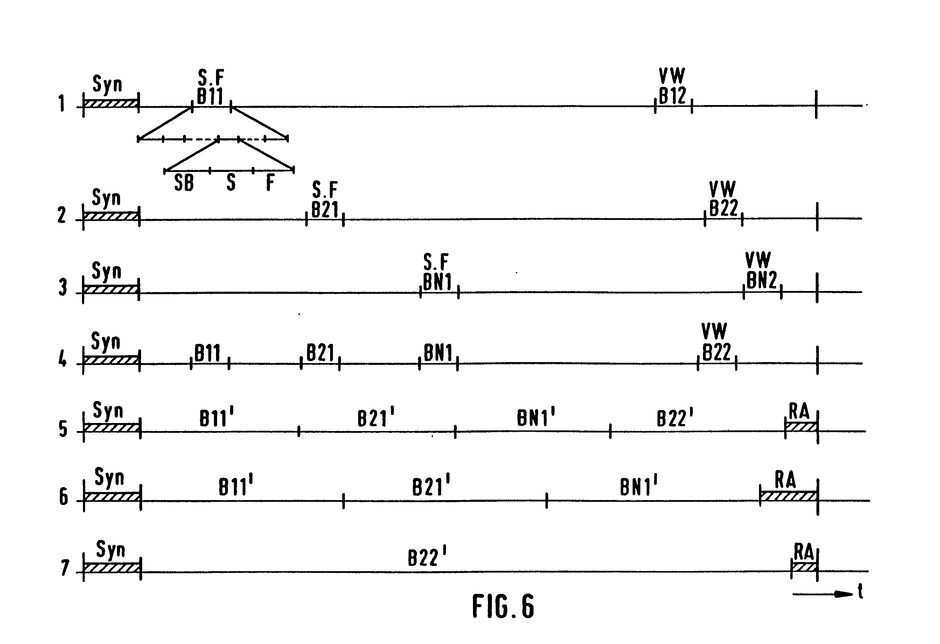

In der Fig. 6 sind mehrere Impulsrahmen dargestellt, anhand derer die Verkehrsabwicklung der drei Nachrichtendienste-Selektivruf S, öffentlich beweglicher Landfunk F und Verkehrswarndurchsage VW - nahegebracht werden soll.

Der Impulsrahmen 1, beginnend wie alle anderen Impulsrahmen auch, mit einem Synchronisierwort Syn, enthält Impulsbündel B11 und B12 von den drei Nachrichtendiensten S, F, VW, welche von den Erdfunkstellen EFSt zu einer ersten Empfangseinheit des Satelliten übertragen werden. Der Impulsrahmen 2 enthält zeitlich versetzt gegenüber den Impulsbündeln des ersten Impulsrahmens 1 die Impulsbündel B21 und B22, die zu einer zweiten Empfangseinheit übertragen werden, und wiederum zeitlich versetzt sind die Impulsbündel BN1 und BN2 im Impulsrahmen 3 angeordnet, welche zu einer dritten Empfangseinheit des Satelliten übermittelt werden.

Eine mögliche Impulsbündelstruktur, hier am Beispiel des von einer Erdfunkstelle ausgesendeten Impulsbündels B11 dargestellt, setzt sich zusammen aus einer Reihe einzelner kleinerer Impulsbündel. Dabei enthält jedes von den letztgenannten Impulsbündeln am Anfang einige Bits SB zum Synchronisieren des Demodulators im Satelliten und danach Informationen der Nachrichtendienste Selektivruf S und öffentlich beweglicher Landfunk F. Bei der Übertragung der Impulsbündel in den Speicher des Satelliten werden die Synchronisierbits SB nicht mit abgespeichert. Das Fehlen dieser Synchronisierbits bei den hinter dem Speicher erscheinenden Impulsbündeln ist in der Fig. 6 durch ein Apostroph kenntlich gemacht. Von den Verkehrswarndurchsagen wird, gesteuert von der Referenzerdfunkstelle REFSt oder der Erdfunkstelle EFSt, während eines Impulsrahmens jeweils nur einer der Impulsbündel B12, B22 oder BN2 übertragen.

Im Impulsrahmen 4 sind sämtliche an den Ausgang A1 des Schaltmatrix SM1 durchgeschalteten Impulsbündel zusammengefaßt. Dieser Impulsrahmen 4 wird in den Speicher übernommen.

Der Impulsrahmen 5, in dem die Impulsbündel B11', B21', BN1' und B22' mit verminderter Bitrate kontinuierlich aneinander gereiht sind, wird vom Satelliten über eine einzige Abwärtsstrecke zur Erde ausgestrahlt. Auch können die Impulsbündel auf verschiedene, in unterschiedliche Richtungen auszustrahlende Impulsrahmen 6 und 7 aufgeteilt werden. Dabei werden auf einer Abwärtsstrecke im Impulsrahmen 6 die Impulsbündel B11', B21' und BN1' und auf einer anderen Abwärtsstrecke im Impulsrahmen 7 das Impulsbündel B22' ausgestrahlt. Dabei können auch verschiedene Bitraten verwendet werden und der Ausgleich zur gleichen Rahmendauer gegebenenfalls über unterschiedlich lange Rahmenausgleiche RA vorgenommen werden.

Während bei den Nachrichtendiensten S, F Meldung an Meldung gereiht werden kann, ist bei den Verkehrswarndurchsagen VW die nächste Durchsage erst möglich, wenn die vorhergehende beendet ist. Eine in Aufwärtsrichtung gleichzeitige Übertragung mehrerer Verkehrswarndurchsagen würde eine Speicherung einer relativ großen Datenmenge im Satelliten erfordern, da bei der Digitalisierung (PCM- oder deltamodulationscodierte Sprache) auch bei einer kurzen Ansage bereits viele Kbit zu speichernder Information anfallen. Deshalb wird vorgeschlagen, daß die Verkehrswarnübertragungseinrichtungen VWÜ eine abzusetzende Meldung zunächst bei der Referenz-Erdfunkstelle REFSt, die hierzu einen Verkehrswarndurchsage-Zuordner erhält, anmeldet. Dies kann über die Satellitenstrecke, zusammen mit den Verkehrsanforderungsmeldungen der Erdfunkstellen EFSt geschehen. Der Zuordner bestimmt, wann welche Verkehrswarnübertragungseinrichtung VWÜ ihre Durchsage absetzen darf. Über die Telemetrie- und Telecontrol-Erdfunkstelle TEFSt oder - falls dies organisatorisch vorgesehen ist - über einen eigenen Telecontrol-Kanal, wird der Steuerung für die Schaltmatrix SM1 des Satelliten mitgeteilt, wann und von welcher Empfangseinheit die nächsten Impulsbündel der Verkehrswarndurchsage zum Speicher durchzuschalten sind. Der angesprochene Zuordner kann vorteilhafterweise auch dazu eingesetzt werden, um mehrere andere Nachrichtendienste in eine für die Übertragung zum Satelliten gewünschte Reihenfolge zu ordnen. Dazu werden die von den verschiedenen Erdfunkstellen auszusendenden Nachrichtendienste bei dem Zuordner angemeldet. Dieser veranlaßt dann die Referenz-Erdfunkstelle REFSt, die andere Erdfunkstelle EFSt so zu steuern, daß sie ihre Nachrichtendienste in der vom Zuordner festgelegten Reihenfolge übertragen.

Die terrestrischen Empfänger der Verkehrswarndurchsagen synchronisieren sich entweder auf den Durchsageteil des gemeinschaftlichen oder des für Verkehrswarndurchsagen bestimmten Rahmens auf und setzen die empfangene digitale Information mittels D/A-Wandler in die Sprachdurchsage um. Wird die Durchsageinformation noch mit einem Kennzeichen für einen regionalen Vorrang ausgestattet, und sind die Empfänger auf verschiedene Regionen oder Gesamtgebiete einstellbar, so kann im Empfänger eingestellt werden, welche Durchsagen verwertet werden und welche unterdrückt werden können.

Ein besonderer Vorteil des hier dargelegten Systems besteht jedoch darin, daß der gleiche terrestrische Empfänger für verschiedene Nachrichtendienste oder Gruppen von Nachrichtendiensten verwendet werden kann und der Satellit die großflächige Ausstrahlung übernimmt, die nötig ist, um Teilnehmer an einem Nachrichtendienst oder Empfänger von Informationen, die über weite Gebiete verteilt sind, zu erreichen.

## Patentansprüche

1. Verfahren zum Übertragen von Nachrichtendiensten im Zeitmultipiexbetrieb mit Mehrfachzugriff (TDMA) über einen Satelliten (SAT) mit mehreren Empfangseinheiten (AT1, VE1, UE1, AT2, VE2, UE2, VE3, UE3) und Sendeeinheiten (DM, SP, M, US1, AT5, US2, VS2, AT4, US3, VS3, AT3, US4, VS4, M1 ... MN, SM2, US11 ... US1N, VS11 ... VS1N), zwischen denen über eine Schaltmatrix (SM1, SM2) beliebige Zuordnungen hergestellt werden können, wobei mehrere empfangene Nachrichtendienste auf mindestens eine Sendeeinheit durchgeschaltet werden, dadurch gekennzeichnet, daß die Nachrichtendienste in der (den) Sendeeinheit(en) (DM, SP, M, US1, VS1, ATS, M1 ... MN, SM2, US11 ... US1N, VS11 ... VS1N) zunächst demoduliert, dann impulsbündelweise abgespeichert und anschließend kontinuierlich mit niedrigerer Bitrate als die Impulsbündel zuvor aufwiesen aus dem Speicher (SP) ausgelesen werden, um schließlich die Nachrichten in Form eines kontinuierlichen Bitstromes auszusenden.

2. Verfahren nach Anspruch 1, dadurch gekennzeichnet, daß ein Impulsrahmen gebildet wird, indem den aus dem Speicher (SP) ausgelesenen, kontinuierlich aufeinamder folgenden Impulsbündeln (B11 ... B33) ein Synchronwort (Syn) vorangesetzt und micht belegte Kapazität des Impulsrahmens mit statistischer Imformation als Rahmenausgleich (RA) aufgefüllt wird.

3. Verfahren nach Anspruch 1, dadurch gekennzeichnet, daß vom Speicher (SP) verschiedene Bitströme ausgegeben werden, denen bestimmte Nachrichtendienste oder Gruppen von Nachrichtendiensten zugeordnet sind, und daß die einzelnen Bitströme nach einer Modulation mittels einer Schaltmatrix (SM2) auf zu bestimmten Ausleuchtgebieten gehörende Antennen (AT4, AT5) geschaltet werden.

4. Verfahren nach Anspruch 3, dadurch gekennzeichnet, daß die Bitraten der Bitströme wählbar sind.

5. Verfahren nach Anspruch 3, dadurch gekennzeichne, daß die Modulationsarten der Bitströme wählbar sind.

## Claims

1. Method for tramsmittimg communications services in time multiplex operation with multiple access (TDMA) via a satellite (SAT) equipped with a plurality of receiving units (AT1, VE1, UE1, AT2, VE2, UE2, VE3, UE3) and transmitting units (DM, SP, M, US1, AT5, US2, VS2, AT4, US3, VS3, AT3, US4, VS4, M1 ... MN, SM2, US11 ... US1N, VS11 ... VS1N) between which any desired associations can be made by way of a switching matrix (SM1, SM2) with a plurality of received communications services being switched through to at least one transmitting unit, characterized in that the communications services are initially demodulated in the transmission unit(s) (DM, SP, M, US1, VS1, AT5, M1 ... MN, SM2, US11 ... US1N, VS11 ... VS1N), are then stored in the form of pulse bursts and subsequently read out of the memory (SP) continuously and at a lower bit rate than they had before to finally be transmitted as data in the form of a continuous stream of bits.

2. Method according to claim 1, characterized in that a pulse frame is formed in that a synchronizing word (Syn) is placed ahead of the pulse bursts (B11... B33) which are read out of the memory (SP) in continuous succession and any unoccupied capacity of the pulse frame is filled with statistical information as frame compensation (RA).

3. Method according to claim 1, characterized in that various bit streams are emitted by the memory (SP), each associated with a certain communications service or group of communications services, and the individual bit streams, after modulation, are switched by means of a switching matrix (SM2) to antennas (AT4, AT5) assigned to certain broadcast regions.

4. Method according to claim 3, characterized in that the bit rates of the bit streams are selectable.

5. Method according to claim 3, characterized in that the types of modulation of the bit streams are selectable.

## Revendications

1. Procédé de transmission de services de communication, en mode multiplex par partage du temps avec accès multiple (TDMA), par un satellite (SAT), au moyen de plusieurs unités réceptrices (AT1, VE1, UE1, AT2, VE2, UE2, VE3, UE3) et d'unités émettrices (DM, SP, M, US1, AT5, US2, VS2, AT4, US3, VS3, AT3, US4, VS4, M1 ... MN, SM2, US11 ... US1N, VS11 ... VS1N), entre lesquelles des attributions peuvent être établies ad libitum par une matrice de commutation (SM1, SM2), plusieurs services de communication reçus étant transmis à au moins une unite émettrice, <u>caractérisé</u> par le fait que, dans la ou les unités émettrices (DM, SP, M, US1, VS1, AT5, M1 ... MN, SM2, US11 ... US1N, VS11 ... VS1N), les services de communication d'abord démodulés puis déposés en mémoire par paquets d'impulsions, sont lus ensuite de manière continue dans la mémoire (SP) avec un débit de bits plus faible que celui que les paquets d'impulsions présentaient auparavant, pour émette finalement les informations sous la forme d'un courant de bits continu.

2. Procédé selon revendication 1, <u>caractérisé</u> par le fait que l'on forme un cadre d'impulsions en faisant précéder par un mot synchroniseur (Syn) les paquets d'impulsions (B11 ... B33) lus dans la mémoire (SP) et se succédant de manière continue, et en remplissant la capacité inoccupée du cadre d'impulsions par de l'information statistique faisant office d'égaliseur de cadre (RA),

3. Procédé selon revendication 1, <u>caractérisé</u> par le fait que l'on tire de la mémoire (SP) divers courants de bits auxquels sont affectés des services de communication ou des groupes de services de communication déterminés, et par le fait que les courants individuels de bits, après modulation au moyen d'une matrice de commutation (SM2), sont transmis à des antennes (AT4, AT5) associées à des territoires desservis déterminés.

4. Procédé selon revendication 3, <u>caractérisé</u> par le fait que les débits de bits des courants de bits peuvent être choisis.

5. Procédé selon revendication 3, <u>caractérisé</u> par le fait que les modes de modulation des courants de bits peuvent être choisis.

FIG.1

FIG.2

0 139 034

FIG.3

FIG.4

FIG. 5

SAT

TN

EFSt

FÜZ VSt FÜZ
VWII
RZ

REFSt
VW-Zuordner

TEFSt

EFSt EFSt
VWII VWII
FÜZ VSt VSt FÜZ
RZ RZ

0 139 034

5

FIG.6